# EUROPEAN PATENT APPLICATION

(11) **EP 4 542 511 A1**
(43) Date of publication of application: **23.04.2025**
(21) Application number: 24190542.1
(22) Date of filing: 24.07.2024
(51) Int. Cl.: G06V 30/242, G06V 30/19

(54) **MODEL TRAINING METHOD FOR DIGIT AND TEXT RECOGNITION, DATA PROCESSING METHOD AND RELATED APPARATUSES**

(30) Priority: 18.10.2023 CN 202311352999
(71) Applicant: Zhejiang Hengyi Petrochemical Co., Ltd., Zhejiang 311200 (CN); Zhejiang Shuangtu New Materials Co., Ltd., Hangzhou, Zhejiang 311255 (CN); Taicang Yifeng Chemical Fiber Co.,Ltd., Suzhou Jiangsu 215421 (CN)
(72) Inventor: WANG, Peng, Hangzhou, 311200 (CN); PENG, Xiantao, Hangzhou, 311200 (CN); QIU, Yibo, Hangzhou, 311200 (CN); DONG, Qingqi, Hangzhou, 311200 (CN); JIANG, Dong, Hangzhou, 311200 (CN); FENG, Chun, Hangzhou, 311200 (CN); LI, Dake, Hangzhou, 311200 (CN)
(74) Representative: Wynne-Jones IP Limited

(57) **Abstract**

Provided is a model training method, a data processing method and related apparatuses, relating to the technical fields of large model, image processing, and computer vision. The method includes: obtaining a historical process flow card set for spinning process; extracting a handwritten area from each historical process flow card; classifying the handwritten area to obtain a handwritten digit image block and a handwritten text image block; constructing a digit recognition model of different handwritten digit categories based on the handwritten digit image block, to extract a target digit from a newly-added process flow card; and constructing a text recognition model of different handwritten text categories based on the handwritten text image block, to extract a target text from the newly-added process flow card; wherein the target digit and the target text are used to construct a process flow database for the spinning process.

## Description

### TECHNICAL FIELD

The present disclosure relates to the field of data processing, and especially to the technical field of large model, image processing, computer vision and others.

### BACKGROUND

In the industrial scenario of spinning process, the spinning process flow is long and complicated. Currently, some key links need to be recorded manually. The relevant process data recorded manually also needs to be manually uploaded to the system for digital storage of the spinning process flow. However, the manual operation is more costly to human resources and inefficient.

### SUMMARY

The present disclosure provides a model training method, a data processing method and related apparatuses, to solve or alleviate one or more technical problems in related technologies.

In a first aspect, the present disclosure provides a model training method, including:
obtaining a historical process flow card set for spinning process;
extracting a handwritten area from each historical process flow card in the historical process flow card set;
classifying the handwritten area to obtain a handwritten digit image block and a handwritten text image block;
constructing a digit recognition model of different handwritten digit categories based on the handwritten digit image block, to extract a target digit from a newly-added process flow card; and
constructing a text recognition model of different handwritten text categories based on the handwritten text image block, to extract a target text from the newly-added process flow card; where the target digit and the target text are used to construct a process flow database for the spinning process.

In a second aspect, the present disclosure provides a data processing method, including:
classifying a newly-added process flow card to obtain a printed area and a handwritten area in the newly-added process flow card in a case where it is determined that the newly-added process flow card has complete content;
performing character recognition on the printed area using a character extraction technology;
recognizing handwritten categories in the handwritten area;
performing character recognition based on a digit recognition model corresponding to a first target handwritten category of digits in a case where the handwritten area includes the first target handwritten category; and
performing character recognition based on a text recognition model corresponding to a second target handwritten category of text in a case where the handwritten area includes the second target handwritten category; where a recognized character is used to construct a process flow database for spinning process.

In a third aspect, the present disclosure provides a model training apparatus, including:
an obtaining module configured to obtain a historical process flow card set for spinning process;
an extracting module configured to extract a handwritten area from each historical process flow card in the historical process flow card set;
a classifying module configured to classify the handwritten area to obtain a handwritten digit image block and a handwritten text image block;
a digit recognition module configured to construct a digit recognition model of different handwritten digit categories based on the handwritten digit image block, to extract a target digit from a newly-added process flow card; and
a text recognition module configured to construct a text recognition model of different handwritten text categories based on the handwritten text image block, to extract a target text from the newly-added process flow card; where the target digit and the target text are used to construct a process flow database for the spinning process.

In a fourth aspect, the present disclosure provides a data processing apparatus, including:
a classifying module configured to classify a newly-added process flow card to obtain a printed area and a handwritten area in the newly-added process flow card in a case where it is determined that the newly-added process flow card has complete content;
a first recognition module configured to perform character recognition on the printed area using a character extraction technology;
a second recognition module configured to recognize handwritten categories in the handwritten area;
a third recognition module configured to perform character recognition based on a digit recognition model corresponding to a first target handwritten category of digits in a case where the handwritten area includes the first target handwritten category; and
a fourth recognition module configured to perform character recognition based on a text recognition model corresponding to a second target handwritten category of text in a case where the handwritten area includes the second target handwritten category; where a recognized character is used to construct a process flow database for spinning process.

In a fifth aspect, provided is an electronic device, including:
at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

In a sixth aspect, provided is a non-transitory computer-readable storage medium storing a computer instruction thereon, and the computer instruction is used to cause a computer to execute the method according to any one of the embodiments of the present disclosure.

In a seventh aspect, provided is a computer program product including a computer program, and the computer program implements the method according to any one of the embodiments of the present disclosure, when executed by a processor.

The solution provided in the embodiments of the present disclosure can improve the recognition accuracy, thereby obtaining the accurate process flow data.

It should be understood that the content described in this part is not intended to identify critical or essential features of embodiments of the present disclosure, nor is it used to limit the scope of the present disclosure. Other features of the present disclosure will be easily understood through the following description.

### BRIEF DESCRIPTION OF THE DRAWINGS

In the accompanying drawings, the same reference numbers represent the same or similar parts or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.
FIG. 1 is a schematic flowchart of a model training method according to an embodiment of the present disclosure.
FIG. 2 is a schematic diagram of a process flow card according to an embodiment of the present disclosure.
FIG. 3a is a schematic diagram of a first sub-image block according to an embodiment of the present disclosure.
FIG. 3b is a schematic diagram of a second sub-image block according to an embodiment of the present disclosure.
FIG. 4a is a schematic diagram of mask processing according to an embodiment of the present disclosure.
FIG. 4b is a schematic diagram of superimposing text to text according to an embodiment of the present disclosure.
FIG. 4c is a schematic diagram of altering text in the second sub-image block according to an embodiment of the present disclosure.
FIG. 5 is a schematic flowchart of a data processing method according to an embodiment of the present disclosure.

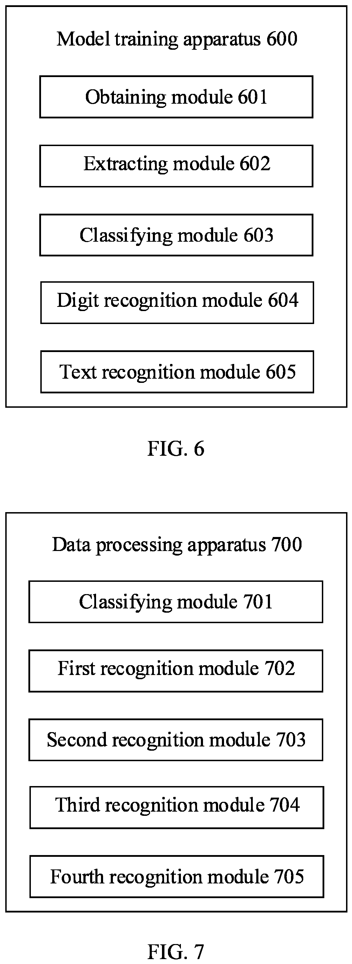

FIG. 6 is a schematic structural diagram of a model training apparatus according to an embodiment of the present disclosure.
FIG. 7 is a schematic structural diagram of a data processing apparatus according to an embodiment of the present disclosure.
FIG. 8 is a block diagram of an electronic device used to implement the model training method\data processing method according to an embodiment of the present disclosure.

### DETAILED DESCRIPTION

The present disclosure will be described below in detail with reference to the accompanying drawings. The same reference numbers in the accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

The information digitization is conducive to improving the efficiency of information management, especially in the spinning process, which is long and complicated. The digitization of each link of the spinning process and archiving it into the system is conducive to tracing each link of the spinning process, providing effective data support for improving the process efficiency and locating problems. However, some process data of the spinning process needs to be manually recorded and uploaded to the system at present. The efficiency is low and it is prone to error.

In view of this, in order to facilitate the accurate and efficient recognition of information in the process flow card for constructing a spinning process database, the embodiments of the present disclosure propose a solution of using a neural network model to recognize different handwritten forms in combination with the advantages of the neural network model and the characteristics of the spinning process. In the following, a model training method in this solution will be firstly illustrated, and then a process of automatically recognizing process flow cards using the trained model will be illustrated.

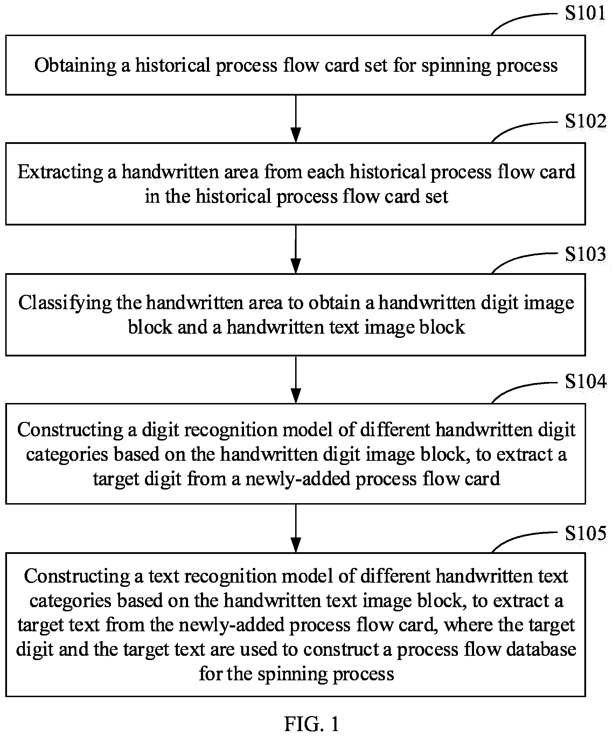

As shown in FIG. 1, an embodiment of the present disclosure proposes a model training method. The trained model is used to extract the content in the process flow card. The method includes the following content:

S 1 01: obtaining a historical process flow card set for spinning process.

Here, the process flow data may include device data, single spindle weighing data, fineness detection data, hosiery dyeing judgment data, appearance inspection data, automatic packaging line data, laboratory test data, trolley delivery data, warehouse management data and supply chain data, etc. Therefore, any process can have a process flow card template.

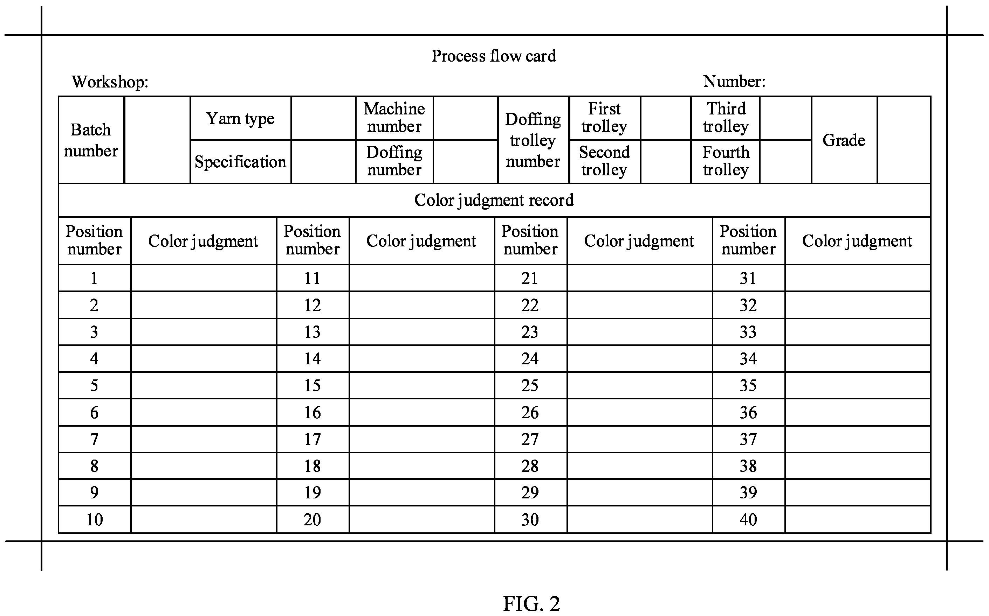

Here, an example of the process flow card may be shown in FIG. 2, including a printed area and a handwritten area that needs to be filled in by a staff member (the words in the printed area is shown in FIG. 2).

Here, the number can be used to determine which process the process flow card belongs to, and other content can be changed according to the actual process, which is not limited in the embodiment of the present disclosure.

Since the printing form is generally clear and easy to recognize, the embodiment of the present disclosure focuses on the recognition of the handwritten form.

S102: extracting a handwritten area from each historical process flow card in the historical process flow card set.

S103: classifying the handwritten area to obtain a handwritten digit image block and a handwritten text image block.

In the spinning process, due to the personnel complexity, the handwritten forms of different operators are different, and it is unrealistic to train models separately for different operators. Therefore, the classification training is carried out for different handwritten forms to obtain recognition models suitable for all handwritten categories in the embodiment of the present disclosure. The details refer to S104 and S105.

S104: constructing a digit recognition model of different handwritten digit categories based on the handwritten digit image block, to extract a target digit from a newly-added process flow card.

S105: constructing a text recognition model of different handwritten text categories based on the handwritten text image block, to extract a target text from the newly-added process flow card, where the target digit and the target text are used to construct a process flow database for the spinning process.

It should be noted that the execution occasions of the S104 and S105 are not limited.

In the embodiment of the present disclosure, the handwritten area is extracted from each historical process flow card in the historical process flow card set; the handwritten area is classified to obtain the handwritten digit image block and the handwritten text image block; the corresponding digit recognition model is trained for the handwritten categories of the handwritten digit image block; and the corresponding text recognition model is trained for the handwritten categories of the handwritten text image block, to obtain the target digit and target text for constructing the process flow database. Based on this method, the relevant data in the textile process flow can be automatically uploaded to save human resources. As for digits and texts, different people have different handwriting styles, so the same digit or text will present different visual effects. By classifying the handwritten forms, the characteristics of the same handwritten form can be sorted out, and the corresponding recognition model is trained to complete the recognition operation, improving the recognition accuracy and thus obtaining the accurate process flow data.

In some embodiments, a plurality of recognition models are created for different handwriting types to improve the recognition accuracy. The specific operations are as follows:

### 1) Construct a digit recognition model for different handwritten digit categories

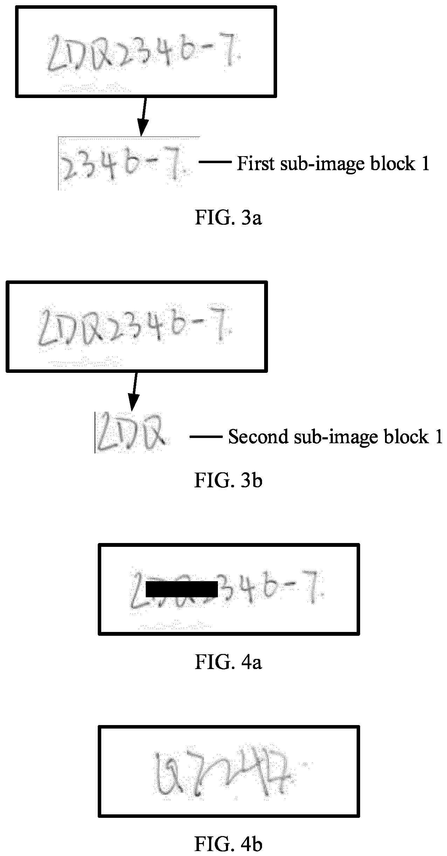

In some embodiments, constructing different handwritten digit categories may be implemented as follows:
Step A1: segmenting the handwritten digit image block into first sub-image blocks respectively corresponding to cells in the historical process flow card by taking the cells as segmentation units.
   As shown in FIG. 3a, one cell may contain handwritten digits and handwritten text. The digits and text in the cell may be separated out in sequence, and the image block belonging to the handwritten digits is determined as a first sub-image block. Of course, some cells contain only handwritten digits, so the image block in such a cell may be determined as a first sub-image block.
Step A2: performing a feature extraction operation on each first sub-image block to obtain a first feature vector of each first sub-image block.
   A relatively basic convolutional neural network may be used to perform the feature extraction operation on each first sub-image block to obtain the first feature vector of each first sub-image block. A network that is improved on the basis of the convolutional neural network may also be used. The improved network includes, for example, a pre-trained backbone network for extracting image features, a Transformer network that introduce an attention mechanism, etc. Any method that can obtain the first feature vector of the first sub-image block is applicable to the embodiments of the present disclosure.
Step A3: performing cluster analysis on the first feature vector of each first sub-image block to obtain different handwritten digit categories.

Since different people may have different handwriting styles, the cluster analysis is performed on the first feature vector of each first sub-image block, which is equivalent to clustering fonts with the same handwriting style and distinguishing fonts with different handwriting styles, to obtain different handwritten digit categories.

In the embodiment of the present disclosure, the feature extraction is performed on the first sub-image block in the handwritten digit image block to obtain the first feature vector of the first sub-image block, and then the clustering operation is performed on the first feature vector to obtain different handwritten categories, laying the foundation for subsequent accurate recognition.

On the basis of obtaining different handwritten digit categories, the step of constructing the digit recognition model of different handwritten digit categories based on the handwritten digit image block may be implemented as follows:
Step B1: training a first large model based on labeled data corresponding to each handwritten digit image block, to enable the first large model to recognize digit content in each historical process flow card.

The labeled data is a specific value corresponding to the first sub-image block in the handwritten digit image block. For example, the labeled data corresponding to the first sub-image block 1 in FIG. 3a is 2346-7.

Here, the first large model may be the Zeus model of the Wenxin large model version 3.0 (ERNIE3.0 Zeus). The ERNIE3.0 Zeus uses the prompt information during training. The large model has the ability to learn based on prompt. Simply put, prompt learning is that the input information of the first large model contains task description, an example sample and a target sample, where the task description is the prompt.

Here, the target sample is a handwritten digit image block, the task description may be "recognize digits in the target sample", and the reference example is "handwritten digit image block 1, prediction result 2346-7". During the training process, the first large model may predict the target sample based on the reference example and the task description to obtain a prediction result, compare the prediction result with the labeled result to obtain a first loss value, and adjust the first large model based on the first loss value to obtain the first large model that meets a first convergence condition.

Here, the first convergence condition may be that the first loss value tends to be stable or a preset number of iterations is satisfied, which is not limited in the embodiment of the present disclosure.

Step B2: for each handwritten category of digits, performing following operations:
Step B21: distilling a first model to be optimized corresponding to the handwritten category from the first large model.

The first model to be optimized corresponding to the handwritten category may be distilled from the first large model using Knowledge Distillation (KD). That is, a small model with fewer parameters, i.e., the first model to be optimized, is constructed based on the model structure of the first large model.

Of course, the lightweight model architecture, pruning, quantization and other distillation methods may also be used to obtain the first model to be optimized.

Step B22: using a handwritten digit image block of the handwritten category to construct a first training sample set of the first model to be optimized.

Here, the first training sample set may be constructed by segmenting, rotating, masking, blocking and polluting (such as outlining and altering the valid information) the handwritten digit image block.

Step B23: training the first model to be optimized based on the first training sample set.

Here, the first model to be optimized is a Region-Convolutional Neural Network (R-CNN), including a first network, a second network, and a third network. Here, the first network is used to extract the feature information of each handwritten digit image block in the first training sample set; the second network is used to determine a target area of each handwritten digit image block; and the third network is used to recognize the content in the area.

During implementation, the first training sample set is input into the first network to obtain the feature information of each handwritten digit image block in the first training sample set; and the feature information is input into the second network to obtain a region candidate frame set and a foreground candidate frame set.

Also, the foreground and background of the handwritten digit image block are divided in advance to obtain a foreground frame region set. The second network screens the region candidate frame set and determines a region candidate frame with a larger foreground probability as the foreground candidate frame set.

The foreground candidate frame set may be compared with the foreground frame region set to determine a screening loss for representing the difference between them. On the basis of determining the foreground candidate frame set in the aforementioned manner, the content in the foreground candidate frame set is recognized based on the third network to obtain a recognition result, and the detection loss between the recognition result and the labeled data is determined.

The learnable parameters of the first model to be optimized are adjusted based on the screening loss and the detection loss, and the training of the first model to be optimized is terminated in a case where the training convergence condition is met.

Here, the training convergence condition may be that the contrastive learning loss and detection loss tend to be stable or a preset number of iterations is satisfied, which is not limited in the embodiment of the present disclosure.

Step B24: screening out samples with a recognition error rate higher than a first error rate threshold from the first training sample set to construct a small sample set in a case where recognition accuracy of the first model to be optimized reaches a bottleneck and does not meet expected accuracy.

Step B25: training the first model to be optimized to learn knowledge of the small sample set to obtain a digit recognition model corresponding to the handwritten category.

In the case where the recognition accuracy of the first model to be optimized reaches the bottleneck and does not meet the expected accuracy, the small sample set is input into the first network in the first model to be optimized to obtain the feature information of the samples in the small sample set. The feature information is input into the second network to obtain a region candidate frame set. Any candidate frame in the region candidate frame set is used as the first candidate frame, and positive and negative sample pairs are constructed for each first candidate frame. Here, the positive and negative sample pairs are defined as follows: using the content in the candidate frame similar to the first candidate frame as a positive sample for constructing a positive sample pair, and using the content in the candidate frame dissimilar to the first candidate frame as a negative sample for constructing a negative sample pair. It should be noted that the candidate frames of the positive and negative sample pairs need to partially overlap with the first candidate frame. Thus, the positive and negative sample pairs with content having a certain correlation with the first candidate frame can be constructed. The contrastive learning loss can be further determined based on the feature distance between two candidate frames in the positive sample pair and the feature distance between two candidate frames in the negative sample pair. The first model to be optimized is adjusted based on the contrastive learning loss to obtain the first model to be optimized that meets a second convergence condition.

Here, the second convergence condition may be that the contrastive learning loss tends to be stable or a preset number of iterations is satisfied, which is not limited in the embodiment of the present disclosure.

It should be noted that a corresponding number of digit recognition models are constructed based on the number of digit handwritten categories, and each digit handwritten category needs to correspond to one digit recognition model.

In the embodiment of the present disclosure, different digit recognition models are constructed for different handwritten categories to achieve the accurate recognition of handwritten digits.

### 2) Construct a text recognition model for different handwritten text categories

In some embodiments, constructing different handwritten text categories may be implemented as follows:
Step C1: segmenting the handwritten text image block into second sub-image blocks respectively corresponding to cells in the historical process flow card by taking the cells as segmentation units.
   As shown in FIG. 3b, one cell may contain handwritten digits and handwritten text. Each digit and text in the cell may be separated out in sequence, and the image block belonging to the handwritten text is determined as a second sub-image block. Of course, some cells contain only handwritten text, so the image block in such a cell may be determined as a second sub-image block.
Step C2: performing a feature extraction operation on each second sub-image block to obtain a second feature vector of each second sub-image block.
   The manner to obtain the second feature vector is similar to the manner to obtain the first feature vector, and will not be described in detail in the embodiment of the present disclosure.
Step C3: performing cluster analysis on the second feature vector of each second sub-image block to obtain different handwritten text categories.

In the embodiment of the present disclosure, the feature extraction is performed on the second sub-image block in the handwritten text image block to obtain the second feature vector of the second sub-image block, and then the clustering operation is performed on the second feature vector to obtain different handwritten categories, laying the foundation for subsequent accurate recognition.

On the basis of obtaining different handwritten text categories, the step of constructing the text recognition model of different handwritten text categories based on the handwritten text image block may be implemented as follows:
Step D1: training a second large model based on labeled data corresponding to each handwritten text image block, to enable the second large model to recognize text content in each historical process flow card.

The labeled data is the specific text corresponding to the second sub-image block in the handwritten text image block. For example, the labeled data corresponding to the second sub-image block 1 in FIG. 3b is LDQ.

Here, the second large model may be the same model as the first large model, or the second largest model may be trained using the training method of the first large model, which is not limited in the embodiment of the present disclosure.

Step D2: for each handwritten category of texts, performing following operations:
Step D21: distilling a second model to be optimized corresponding to the handwritten category from the second large model.

Here, the second model to be optimized is obtained in a similar manner to the first model to be optimized, which will not be described in detail in the embodiment of the present disclosure.

Step D22: using a handwritten text image block of the handwritten category to construct a second training sample set of the second model to be optimized.

Here, the second training sample set of the second model to be optimized may be constructed in the following manner:
Step E1: obtaining second sub-image blocks respectively corresponding to cells into which the handwritten text image block is segmented by taking the cells as units.
Step E2: performing at least one of preset operations on data in each second sub-image block to obtain an extended sample, where the second training sample set includes extended samples and second sub-image blocks; and the preset operations include mask processing, superimposing text to text, and altering text in the second sub-image block.

Here, the mask processing is shown in FIG. 4a, that is, the text is covered, so that the model can still accurately recognize handwritten words even in a case where the handwritten words are blurred. In addition, some text content can also be deleted so that the model can learn sample knowledge of abbreviations or abbreviations and thus derive the correct and complete expression.

Superimposing text to text is shown in FIG. 4b, that is, many kinds of characters are superimposed, or breakpoints of characters are unclear, or there are connected strokes.

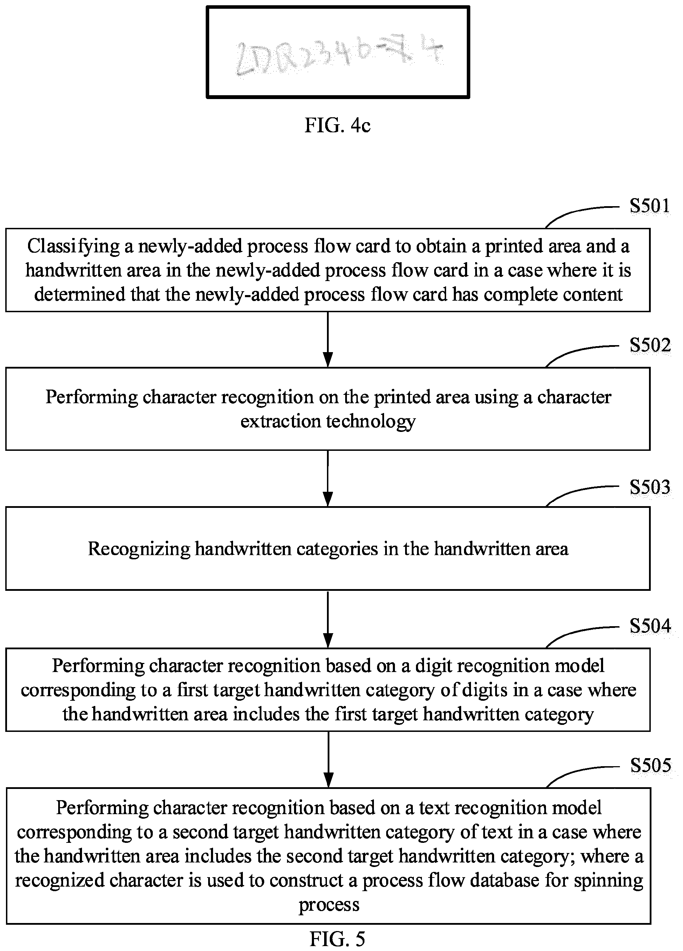

Altering text in the second sub-image block is shown in FIG. 4c. In a case where there is an error in the text, the text can be altered so that the model can learn the sample characteristics of the task under alteration, so as to be able to recognize the correct text content under alteration.

In the embodiment of the present disclosure, the extended samples are constructed taking into account various cases. The second training sample set obtained in this way comprehensively considers various cases of handwritten text, so that the second model to be optimized can subsequently learn various writing cases, to achieve the purpose of improving the recognition accuracy.

Step D23: training the second model to be optimized based on the second training sample set.

The model structure of the second model to be optimized may be the same as the above-mentioned structure of the first model to be optimized. The training manner is also the same as the first model to be optimized. Finally, the learnable parameters of the second model to be optimized are adjusted based on the screening loss and the detection loss, and the training of the second model to be optimized is terminated in a case where the training convergence condition is met.

Step D24: screening out samples with a recognition error rate higher than a second error rate threshold from the second training sample set to construct a small sample set in a case where recognition accuracy of the second model to be optimized reaches a bottleneck and does not meet expected accuracy.

Step D25: training the second model to be optimized to learn knowledge of the small sample set to obtain a text recognition model corresponding to the handwritten category.

In the case where the recognition accuracy of the second model to be optimized reaches the bottleneck and does not meet the expected accuracy, the small sample set is input into the first network in the second model to be optimized to obtain the feature information of the samples in the small sample set. The feature information is input into the second network to obtain a region candidate frame set. Any candidate frame in the region candidate frame set is used as the first candidate frame, and positive and negative sample pairs are constructed for each first candidate frame. Here, the positive and negative sample pairs are defined as follows: using the content in the candidate frame similar to the first candidate frame as a positive sample for constructing a positive sample pair, and using the content in the candidate frame dissimilar to the first candidate frame as a negative sample for constructing a negative sample pair. It should be noted that the candidate frames of the positive and negative sample pairs need to partially overlap with the first candidate frame. Thus, the positive and negative sample pairs with content having a certain correlation with the first candidate frame can be constructed. The contrastive learning loss can be further determined based on the feature distance between two candidate frames in the positive sample pair and the feature distance between two candidate frames in the negative sample pair. The second model to be optimized is adjusted based on the contrastive learning loss to obtain the second model to be optimized that meets a second convergence condition.

Here, the second convergence condition may be that the contrastive learning loss tends to be stable or a preset number of iterations is satisfied, which is not limited in the embodiment of the present disclosure.

It should be noted that a corresponding number of text recognition models are constructed based on the number of text handwritten categories, and each text handwritten category needs to correspond to one text recognition model.

In the embodiment of the present disclosure, different text recognition models are constructed for different handwritten categories to achieve the accurate recognition of handwritten text.

On the basis of the text recognition model and the digit recognition model obtained above, an embodiment of the present disclosure further provides a data processing method, as shown in FIG. 5, which can be implemented as follows:
S501: classifying a newly-added process flow card to obtain a printed area and a handwritten area in the newly-added process flow card in a case where it is determined that the newly-added process flow card has complete content.

As shown in FIG. 2, a black broken line frame may be used for marking around the process flow card. In a case where a neural network is used to detect the process flow card and the content within the black broken line frame is detected, the integrity of the process flow card may be determined. Of course, a reference point may also be used for marking, which is not limited in the embodiment of the present disclosure.

A QR code or barcode may also be used in the process flow card. The QR code or barcode can not only locate the complete flow card area to confirm whether the process flow card is complete, but also determine that the process flow card is a process flow card belonging to a certain process flow link.

In a case where a complete new process flow card cannot be obtained or the process flow card is unclear, the staff can be prompted to re-photograph the process flow card.

S502: performing character recognition on the printed area using a character extraction technology.

The character extraction technology may be OCR (Optical Character Recognition) technology, Fast Oriented Text Spotting (FOTS), etc. Any technology that can recognize words may be applicable to the embodiment of the present disclosure, and is not limited in the embodiment of the present disclosure.

S503: recognizing handwritten categories in the handwritten area.

S504: performing character recognition based on a digit recognition model corresponding to a first target handwritten category of digits in a case where the handwritten area includes the first target handwritten category.

S505: performing character recognition based on a text recognition model corresponding to a second target handwritten category of text in a case where the handwritten area includes the second target handwritten category; where a recognized character is used to construct a process flow database for spinning process.

In the embodiment of the present disclosure, the corresponding model is used for recognition based on each handwritten category, which not only realizes the data recognition of the fully automatic flow, but also improves the accuracy in recognizing handwritten words.

In some embodiments, based on the above-mentioned character obtained by recognition, the character may be directly stored in the process flow database. However, since the number of recognized characters is too large, directly storing them in the process flow database may cause reading and writing of the process flow database many times, and may cause reading and writing errors. Therefore, in the embodiment of the present disclosure, a non-relational database is used for intermediate storage to reduce the number of reads and writes for the process flow database. The solution may be implemented as follows:
Step F1: using a character recognized from the printed area as a key; and using a character recognized through the digit recognition model or text recognition model as a value.
Step F2: creating an associated value for the key, and then storing them in the non-relational database.

The non-relational database may be MongoDB (a database based on distributed file storage), Redis (a remote dictionary service), etc.

The process flow cards of different links may call the corresponding key-value values (key-value pairs) and store them in the non-relational database.

Step F3: updating information in the non-relational database into the process flow database in a case where it is determined that recognition of the process flow card is completed.

Here, in the case where it is determined that the recognition of the process flow card is completed, the information in the non-relational database may be updated into the process flow database, and then the information in the non-relational database may be cleared for use in reading the next process flow card.

In the embodiment of the present disclosure, the non-relational database is used to perform intermediate caching on the read data, so as to reduce the number of times the process flow database is read, and improve the accuracy of data upload.

After the product information in the process flow card is entered into the process flow database, the product information in the process flow card may be verified based on the standard information in the process flow database, to verify which products are unqualified; and the unqualified products are marked with colors, to remind the staff that these products need to be processed.

During the object inspection link of the process flow link, the inspection of a produced spinning product may contain multiple tests, and the person responsible for each test may be different. Therefore, a situation where handwritten notes from multiple persons appear in one process flow card may occur. Thus, the QR code or barcode of the process flow card can be recognized to determine which link the process flow card belongs to. For example, in a case where the process flow card belongs to the object inspection link, the handwritten areas are divided based on different work links, and the corresponding recognition model is called based on the font type of each area to obtain the target digits and target text. The corresponding key-value values are stored in the non-relational database. In the case where it is determined that the recognition of the process flow card is completed, the information in the non-relational database is updated into the process flow database, and simultaneously the information in the non-relational database is cleared.

During implementation, marks for different links may be set in the process flow card to facilitate the recognition of parameters of different work links in the same process flow card. For example, different object inspection projects may need to be performed in the object inspection link, and different projects may be completed by the same person or different persons. In this way, the handwritten text content of different projects can be accurately recognized for use in automatically establishing the process flow.

Based on the same technical concept, an embodiment of the present disclosure further provides a model training apparatus 600, including:
an obtaining module 601 configured to obtain a historical process flow card set for spinning process;
an extracting module 602 configured to extract a handwritten area from each historical process flow card in the historical process flow card set;
a classifying module 603 configured to classify the handwritten area to obtain a handwritten digit image block and a handwritten text image block;
a digit recognition module 604 configured to construct a digit recognition model of different handwritten digit categories based on the handwritten digit image block, to extract a target digit from a newly-added process flow card; and
a text recognition module 605 configured to construct a text recognition model of different handwritten text categories based on the handwritten text image block, to extract a target text from the newly-added process flow card; where the target digit and the target text are used to construct a process flow database for the spinning process.

In some embodiments, the apparatus further includes a digit construction module configured to:
segment the handwritten digit image block into first sub-image blocks respectively corresponding to cells in the historical process flow card by taking the cells as segmentation units;
perform a feature extraction operation on each first sub-image block to obtain a first feature vector of each first sub-image block; and
perform cluster analysis on the first feature vector of each first sub-image block to obtain different handwritten digit categories.

In some embodiments, the apparatus further includes a text construction module configured to:
segment the handwritten text image block into second sub-image blocks respectively corresponding to cells in the historical process flow card by taking the cells as segmentation units;
perform a feature extraction operation on each second sub-image block to obtain a second feature vector of each second sub-image block; and
perform cluster analysis on the second feature vector of each second sub-image block to obtain different handwritten text categories.

In some embodiments, the digit recognition module includes:
a first training unit configured to train a first large model based on labeled data corresponding to each handwritten digit image block, to enable the first large model to recognize digit content in each historical process flow card;
a first obtaining unit configured to, for each handwritten category of digits, distill a first model to be optimized corresponding to the handwritten category from the first large model;
a first construction unit configured to use a handwritten digit image block of the handwritten category to construct a first training sample set of the first model to be optimized;
a second training unit configured to train the first model to be optimized based on the first training sample set;
a second construction unit configured to screen out samples with a recognition error rate higher than a first error rate threshold from the first training sample set to construct a small sample set in a case where recognition accuracy of the first model to be optimized reaches a bottleneck and does not meet expected accuracy; and
a first determining unit configured to train the first model to be optimized to learn knowledge of the small sample set to obtain a digit recognition model corresponding to the handwritten category.

In some embodiments, the text recognition module includes:
a third training unit configured to train a second large model based on labeled data corresponding to each handwritten text image block, to enable the second large model to recognize text content in each historical process flow card;
a second obtaining unit configured, for each handwritten category of texts, to distill a second model to be optimized corresponding to the handwritten category from the second large model;
a third construction unit configured to use a handwritten text image block of the handwritten category to construct a second training sample set of the second model to be optimized;
a fourth training unit configured to train the second model to be optimized based on the second training sample set;
a fourth construction unit configured to screen out samples with a recognition error rate higher than a second error rate threshold from the second training sample set to construct a small sample set in a case where recognition accuracy of the second model to be optimized reaches a bottleneck and does not meet expected accuracy; and
a second determining unit configured to train the second model to be optimized to learn knowledge of the small sample set to obtain a text recognition model corresponding to the handwritten category.

In some embodiments, the third construction unit is configured to:
obtain second sub-image blocks respectively corresponding to cells into which the handwritten text image block is segmented by taking the cells as units; and
perform at least one of preset operations on data in each second sub-image block to obtain an extended sample, where the second training sample set includes extended samples and second sub-image blocks;
where the preset operations include mask processing, superimposing text to text, and altering text in the second sub-image block.

Based on the same technical concept, an embodiment of the present disclosure further provides a data processing apparatus 700, including:
a classifying module 701 configured to classify a newly-added process flow card to obtain a printed area and a handwritten area in the newly-added process flow card in a case where it is determined that the newly-added process flow card has complete content;
a first recognition module 702 configured to perform character recognition on the printed area using a character extraction technology;
a second recognition module 703 configured to recognize handwritten categories in the handwritten area;
a third recognition module 704 configured to perform character recognition based on a digit recognition model corresponding to a first target handwritten category of digits in a case where the handwritten area includes the first target handwritten category; and
a fourth recognition module 705 configured to perform character recognition based on a text recognition model corresponding to a second target handwritten category of text in a case where the handwritten area includes the second target handwritten category; where a recognized character is used to construct a process flow database for spinning process.

In some embodiments, the apparatus further includes a cache module configured to:
use a character recognized from the printed area as a key;
use a character recognized through the digit recognition model or text recognition model as a value;
create an associated value for the key, and then store them in a non-relational database; and
update information in the non-relational database into the process flow database in a case where it is determined that recognition of the process flow card is completed.

For the description of specific functions and examples of the modules and sub-modules of the apparatus of the embodiment of the present disclosure, reference may be made to the relevant description of the corresponding steps in the above-mentioned method embodiments, and details are not repeated here.

In the technical solution of the present disclosure, the acquisition, storage and application of the user's personal information involved are in compliance with relevant laws and regulations, and do not violate public order and good customs.

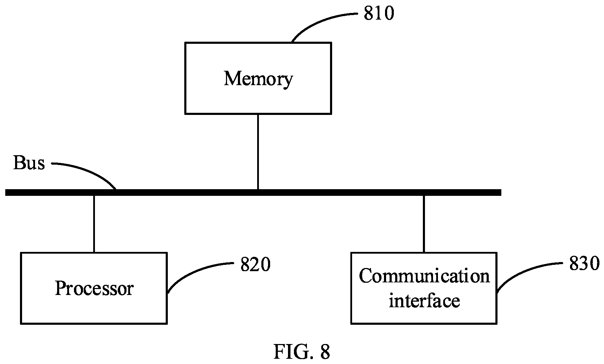

FIG. 8 is a structural block diagram of an electronic device according to an embodiment of the present disclosure. As shown in FIG. 8, the electronic device includes: a memory 810 and a processor 820, and the memory 810 stores a computer program that can run on the processor 820. There may be one or more memories 810 and processors 820. The memory 810 may store one or more computer programs, and the one or more computer programs cause the electronic device to perform the method provided in the above method embodiment, when executed by the electronic device. The electronic device may also include: a communication interface 830 configured to communicate with an external device for data interactive transmission.

If the memory 810, the processor 820 and the communication interface 830 are implemented independently, the memory 810, the processor 820 and the communication interface 830 may be connected to each other and complete communication with each other through a bus. The bus may be an Industry Standard Architecture (ISA) bus, a Peripheral Component Interconnect (PCI) bus, or an Extended Industry Standard Architecture (EISA) bus, etc. The bus may be divided into address bus, data bus, control bus, etc. For ease of representation, the bus is represented by only one thick line in FIG. 8, but this thick line does not represent only one bus or only one type of bus.

Optionally, in a specific implementation, if the memory 810, the processor 820 and the communication interface 830 are integrated on one chip, the memory 810, the processor 820 and the communication interface 830 may communicate with each other through an internal interface.

It should be understood that the above-mentioned processor may be a Central Processing Unit (CPU) or other general-purpose processor, a Digital Signal Processing (DSP), an Application Specific Integrated Circuit (ASIC), a Field Programmable Gate Array (FPGA) or other programmable logic device, a discrete gate or transistor logic device, a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a Read-Only Memory (ROM), a Programmable ROM (PROM), an Erasable PROM (EPROM), an Electrically EPROM (EEPROM) or a flash memory. The volatile memory may include a Random Access Memory (RAM), which acts as an external cache. By way of illustration and not limitation, many forms of RAMs are available, for example, Static RAM (SRAM), Dynamic Random Access Memory (DRAM), Synchronous DRAM (SDRAM), Double Data Date SDRAM (DDR SDRAM), Enhanced SDRAM (ESDRAM), Synchlink DRAM (SLDRAM) and Direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, Digital Versatile Disc (DVD)), or semiconductor media (for example, Solid State Disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "one embodiment", "some embodiments", "example", "specific example" or "some examples", etc. means that specific features, structures, materials or characteristics described in conjunction with the embodiment or example are included in at least one embodiment or example of the present disclosure. Moreover, the specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "multiple" means two or more, unless otherwise specified.

The above descriptions are only exemplary embodiments of the present disclosure and not intended to limit the present disclosure. Any modifications, equivalent replacements, improvements and others made within the principle of the present disclosure shall be contained in the protection scope of the present disclosure.

## Claims

1. A model training method, **characterized by** comprising:
obtaining (S101) a historical process flow card set for spinning process;
extracting (S102) a handwritten area from each historical process flow card in the historical process flow card set;
classifying (S103) the handwritten area to obtain a handwritten digit image block and a handwritten text image block;
constructing (S104) a digit recognition model of different handwritten digit categories based on the handwritten digit image block, to extract a target digit from a newly-added process flow card; and
constructing (S105) a text recognition model of different handwritten text categories based on the handwritten text image block, to extract a target text from the newly-added process flow card; wherein the target digit and the target text are used to construct a process flow database for the spinning process.

2. The method of claim 1, wherein constructing different handwritten digit categories, comprises:
segmenting the handwritten digit image block into first sub-image blocks respectively corresponding to cells in the historical process flow card by taking the cells as segmentation units;
performing a feature extraction operation on each first sub-image block to obtain a first feature vector of each first sub-image block; and
performing cluster analysis on the first feature vector of each first sub-image block to obtain different handwritten digit categories.

3. The method of claim 1, wherein constructing different handwritten text categories, comprises:
segmenting the handwritten text image block into second sub-image blocks respectively corresponding to cells in the historical process flow card by taking the cells as segmentation units;
performing a feature extraction operation on each second sub-image block to obtain a second feature vector of each second sub-image block; and
performing cluster analysis on the second feature vector of each second sub-image block to obtain different handwritten text categories.

4. The method of claim 1, wherein constructing (S104) the digit recognition model of different handwritten digit categories based on the handwritten digit image block, comprises:
training a first large model based on labeled data corresponding to each handwritten digit image block, to enable the first large model to recognize digit content in each historical process flow card;
for each handwritten category of digits, performing following operations:
distilling a first model to be optimized corresponding to the handwritten category from the first large model;
using a handwritten digit image block of the handwritten category to construct a first training sample set of the first model to be optimized;
training the first model to be optimized based on the first training sample set;
screening out samples with a recognition error rate higher than a first error rate threshold from the first training sample set to construct a small sample set in a case where recognition accuracy of the first model to be optimized reaches a bottleneck and does not meet expected accuracy; and
training the first model to be optimized to learn knowledge of the small sample set to obtain a digit recognition model corresponding to the handwritten category.

5. The method of claim 1, wherein constructing (S105) the text recognition model of different handwritten text categories based on the handwritten text image block, comprises:
training a second large model based on labeled data corresponding to each handwritten text image block, to enable the second large model to recognize text content in each historical process flow card;
for each handwritten category of texts, performing following operations:
distilling a second model to be optimized corresponding to the handwritten category from the second large model;
using a handwritten text image block of the handwritten category to construct a second training sample set of the second model to be optimized;
training the second model to be optimized based on the second training sample set;
screening out samples with a recognition error rate higher than a second error rate threshold from the second training sample set to construct a small sample set in a case where recognition accuracy of the second model to be optimized reaches a bottleneck and does not meet expected accuracy; and
training the second model to be optimized to learn knowledge of the small sample set to obtain a text recognition model corresponding to the handwritten category.

6. The method of claim 5, wherein using the handwritten text image block of the handwritten category to construct the second training sample set of the second model to be optimized, comprises:
obtaining second sub-image blocks respectively corresponding to cells into which the handwritten text image block is segmented by taking the cells as units; and
performing at least one of preset operations on data in each second sub-image block to obtain an extended sample, wherein the second training sample set comprises extended samples and second sub-image blocks;
wherein the preset operations comprise mask processing, superimposing text to text, and altering text in the second sub-image block.

7. A data processing method, **characterized by** comprising:
classifying (S501) a newly-added process flow card to obtain a printed area and a handwritten area in the newly-added process flow card in a case where it is determined that the newly-added process flow card has complete content;
performing (S502) character recognition on the printed area using a character extraction technology;
recognizing (S503) handwritten categories in the handwritten area;
performing (S504) character recognition based on a digit recognition model corresponding to a first target handwritten category of digits in a case where the handwritten area comprises the first target handwritten category; and
performing (S505) character recognition based on a text recognition model corresponding to a second target handwritten category of text in a case where the handwritten area comprises the second target handwritten category; wherein a recognized character is used to construct a process flow database for spinning process.

8. The method of claim 7, further comprising:
using a character recognized from the printed area as a key;
using a character recognized through the digit recognition model or text recognition model as a value;
creating an associated value for the key, and then storing them in a non-relational database; and
updating information in the non-relational database into the process flow database in a case where it is determined that recognition of the process flow card is completed.

9. A model training apparatus (600), **characterized by** comprising:
an obtaining module (601) configured to obtain a historical process flow card set for spinning process;
an extracting module (602) configured to extract a handwritten area from each historical process flow card in the historical process flow card set;
a classifying module (603) configured to classify the handwritten area to obtain a handwritten digit image block and a handwritten text image block;
a digit recognition module (604) configured to construct a digit recognition model of different handwritten digit categories based on the handwritten digit image block, to extract a target digit from a newly-added process flow card; and
a text recognition module (605) configured to construct a text recognition model of different handwritten text categories based on the handwritten text image block, to extract a target text from the newly-added process flow card; wherein the target digit and the target text are used to construct a process flow database for the spinning process.

10. The apparatus of claim 9, further comprising a digit construction module configured to:
segment the handwritten digit image block into first sub-image blocks respectively corresponding to cells in the historical process flow card by taking the cells as segmentation units;
perform a feature extraction operation on each first sub-image block to obtain a first feature vector of each first sub-image block; and
perform cluster analysis on the first feature vector of each first sub-image block to obtain different handwritten digit categories.

11. The apparatus of claim 9, further comprising a text construction module configured to:
segment the handwritten text image block into second sub-image blocks respectively corresponding to cells in the historical process flow card by taking the cells as segmentation units;
perform a feature extraction operation on each second sub-image block to obtain a second feature vector of each second sub-image block; and
perform cluster analysis on the second feature vector of each second sub-image block to obtain different handwritten text categories.

12. A data processing apparatus (700), **characterized by** comprising:
a classifying module (701) configured to classify a newly-added process flow card to obtain a printed area and a handwritten area in the newly-added process flow card in a case where it is determined that the newly-added process flow card has complete content;
a first recognition module (702) configured to perform character recognition on the printed area using a character extraction technology;
a second recognition module (703) configured to recognize handwritten categories in the handwritten area;
a third recognition module (704) configured to perform character recognition based on a digit recognition model corresponding to a first target handwritten category of digits in a case where the handwritten area comprises the first target handwritten category; and
a fourth recognition module (705) configured to perform character recognition based on a text recognition model corresponding to a second target handwritten category of text in a case where the handwritten area comprises the second target handwritten category; wherein a recognized character is used to construct a process flow database for spinning process.

13. The apparatus of claim 12, further comprising a cache module configured to:
use a character recognized from the printed area as a key;
use a character recognized through the digit recognition model or text recognition model as a value;
create an associated value for the key, and then store them in a non-relational database; and
update information in the non-relational database into the process flow database in a case where it is determined that recognition of the process flow card is completed.

14. A non-transitory computer-readable storage medium storing a computer instruction thereon, wherein the computer instruction is used to cause a computer to execute the method of any one of claims 1 to 8.

15. A computer program product comprising a computer program, wherein the computer program implements the method of any one of claims 1 to 8, when executed by a processor.
